# EUROPEAN PATENT SPECIFICATION

(11) **EP 4 053 224 B1**
(45) Date of publication and mention of the grant of the patent: **16.07.2025**
(21) Application number: 20882834.3
(22) Date of filing: 27.08.2020
(51) Int. Cl.: C09D 5/02, C09D 5/16, C08L 83/04, C09D 201/00, C09D 7/65

(54) **AQUEOUS PAINT ADDITIVE, AQUEOUS PAINT COMPOSITION, AND COATING LAYER**
WÄSSRIGE LACKADDITIVE, WÄSSRIGE LACKZUSAMMENSETZUNG UND ÜBERZUGSSCHICHT
ADDITIF POUR PEINTURE AQUEUSE, COMPOSITION DE PEINTURE AQUEUSE ET COUCHE DE REVÊTEMENT

(30) Priority: 29.10.2019 JP 2019196496
(43) Date of publication of application: 07.09.2022
(73) Proprietor: Shin-Etsu Chemical Co., Ltd., Tokyo 100-0005 (JP)
(72) Inventor: GOTO, Tomoyuki, Annaka-shi, Gunma 379-0224 (JP)
(74) Representative: Sonnenhauser, Thomas Martin
(86) International application number: PCT/JP2020/032432
(87) International publication number: WO 2021/084881

(56) References cited:
- EP-A1- 3 147 307
- EP-A1- 3 450 483
- WO-A1-2013/100177
- WO-A1-2013/100207
- WO-A1-2018/029966
- JP-A- 2001 039 819
- JP-A- 2004 250 699
- JP-A- 2010 013 591
- JP-A- 2010 525 131
- JP-A- 2017 088 808
- JP-A- 2018 080 275
- JP-A- H06 322 294

## Description

### TECHNICAL FIELD

The present invention relates to: an additive for water-based paint, the additive containing a siloxane-branched polyether-modified silicone; a water-based paint composition and a coating layer containing the additive for water-based paint; and, in further detail, a water-based paint composition and a coating layer with antifouling performance.

### BACKGROUND ART

In recent years, coatings with paints are performed so as to prevent dirt in various uses including: electric appliances, such as portable telephones, personal computers, televisions, and plasma displays; transportation equipment, such as motor vehicles and trains; and further various everyday necessities.

As a paint with excellent antifouling property, generally, a composition using an additive which contains fluorine in a molecule (Patent Document 1) is known. However, because the material is expensive, and from the standpoint of environmental issues, fluorine-free additives are required. From the same standpoint of environmental issues, water-based (water-soluble, water-dispersible) materials are also attracting attention as paints to be used.

As a fluorine-free paint additive, a polyether-modified silicone is widely used as paint additive for reasons of surface leveling property, defoaming property, etc. (Patent Document 2). However, a polyether-modified silicone imparting excellent antifouling performance is not known.

On the other hand, as a polyether-modified silicone for enhancing an emulsifying property for cosmetics, a siloxane-branched polyether-modified silicone produced by addition reaction of a polyoxyalkylene compound and a silicone compound to an organohydrogenpolysiloxane is known (Patent Document 3). However, the document does not disclose applications for paints at all. EP 3 147 307 A1 discloses a production method of a liquid high-purity polyhydric alcohol derivative-modified silicone or a composition thereof, the method comprising: a capturing step of bringing into an impurity-containing composition containing a liquid polyhydric alcohol derivative-modified silicone and hydrophilic impurities originating from a polyhydric alcohol derivative, the polyhydric alcohol derivative being a hydrophilic modifier of the polyhydric alcohol derivative-modified silicone, into contact with solid particles capable of capturing the hydrophilic impurities, and then capturing the hydrophilic impurities with the solid particles; and a separating step of separating the polyhydric alcohol derivative-modified silicone and the solid particles. WO 2013/100207 A1 discloses a liquid organopolysiloxane having fluidity at at least 100°C, a silicon-bonded glycerin derivative group, and a crosslinked structure comprising a carbon-silicon bond at the crosslinking portion. EP 3 450 483 A1 discloses silicone material that is a organopolysiloxane or acid-neutralized salt thereof that contains a side-chain bonded hydrophilic group having tertiary-amine structure and is represented by formula: -C_{q}H_{2q}-O-CH₂-CH(OH)-CH₂-N(R^{Q1})(R^{Q2}), wherein q is a number ranging from 1 to 6, R^{Q1} and R^{Q2} are a halogen-substituted or non-substituted monovalent hydrocarbon group or alkanol group, at least one of R^{Q1} and R^{Q2} has a hydroxyl group, but total number of hydroxyl groups in R^{Q1} and R^{Q2} is 3 or less, and any of R^{Q1} and R^{Q2} does not have a nitrogen atom in the group. WO 2013/100177 A1 discloses a co-modified organopolysiloxane having a viscosity at 25°C of not more than 1,500 mPa·s, a group that has a siloxane dendron structure, and a hydrophilic group.

### CITATION LIST

### PATENT LITERATURE

Patent Document 1: JP 2018-070683 A
Patent Document 2: JP 2013-166830 A
Patent Document 3: JP 2001-039819 A
Patent Document 4: EP 3 147 307 A1
Patent Document 5: WO 2013/100207 A1
Patent Document 6: EP 3 450 483 A1
Patent Document 7: WO 2013/100177 A1

### SUMMARY OF INVENTION

### TECHNICAL PROBLEM

The present invention has been made in view of the circumstance. An object of the present invention is to provide: a paint additive and a paint composition, particularly a water-based paint, with small environmental load and imparting excellent antifouling performance.

### SOLUTION TO PROBLEM

To achieve the object, the present invention provides an additive for water-based paint, comprising a siloxane-branched polyether-modified silicone shown by an average composition formula (1) R¹ₐR²_{b}R³_{c}SiO_{(4-a-b-c)/2} and having a weight-average molecular weight in a range of 500 to 100,000,
wherein in the formula (1) each R¹ is identical to or different from one another and represents an organic group selected from an alkyl group, an aryl group, and an aralkyl group having 1 to 30 carbon atoms, and an organic group shown by a general formula (2) -CₘH₂ₘ-O-(C₂H₄O)_{d}(C₃H₆₀)ₑR⁴;
each R² represents a group shown by a general formula (3) -CₘH₂ₘ-O-(C₂H₄O)_{f}(C₃H₆O)_{g}-R⁵;
each R³ represents an organosiloxane shown by the following general formula (4) 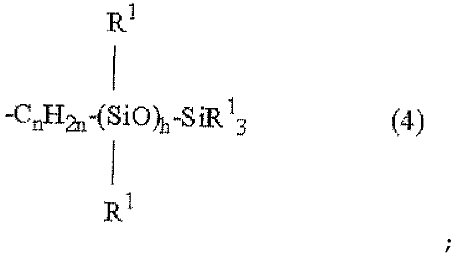
R⁴ represents a hydrocarbon group having 4 to 30 carbon atoms, or an organic group shown by R⁶-(CO)-;
R⁵ represents a hydrogen atom, a hydrocarbon group having 1 to 30 carbon atoms, or an organic group shown by R⁶-(CO)-;
R⁶ represents a hydrocarbon group having 1 to 30 carbon atoms;
R¹ in the general formula (4) is the same as R¹ in the formula (1);
"a", "b", and "c" respectively satisfy 1.0≤a≤2.5, 0.001≤b≤1.5, and 0.001≤c≤1.5;
"d" and "e" respectively represent integers satisfying 0≤d≤50 and 0≤e≤50;
"f" and "g" respectively represent integers satisfying 2≤f≤200, 0≤g≤200, and f+g being 3 to 200;
"m" represents an integer satisfying 0≤m≤10;
"h" represents an integer satisfying 0≤h≤500; and
"n" represents an integer satisfying 1≤n≤5, and wherein the siloxane-branched polyether-modified silicone satisfies the following expression (I) and the following expression (II), 5 ≤ {(a total molecular weight of a (C2H4O)d part in the general formula (2) and a(C2H4O)f part in the general formula (3) incorporated in the siloxane-branched polyether-modified silicone)/(a molecular weight of the siloxane-branched polyether-modified silicone)}×20 ≤ 10, and {(a total molecular weight of a (C3H6O)e part in the general formula (2) and a(C3H6O)g part in the general formula (3) incorporated in the siloxane-branched polyether-modified silicone)/(a total molecular weight of a (C2H4O)d part in the general formula (2) and a (C2H4O)f part in the general formula (3) incorporated in the siloxane-branched polyether-modified silicone)} ≤ 1.0.

Such an additive for water-based paint can have little environmental load and impart excellent antifouling performance.

Moreover, the additive for water-based paint preferably further comprises a solvent.

Such an additive for water-based paint can have more excellent workability.

Further, the present invention provides a water-based paint composition comprising the additive for water-based paint.

Such a paint composition, particularly a water-based paint, contains the paint additive which successfully reduces environmental load and imparts excellent antifouling performance.

Furthermore, the inventive water-based paint composition preferably comprises a resin selected from the group consisting of urethane resins, acrylic resins, amide resins, phenolic resins, epoxy resins, melamine resins, urea resins, alkyd resins, polyimide resins, polyalkylene resins, polyvinyl chloride, polystyrene, polyvinyl acetate, and alloys of the resins.

Such various resins can be employed in the inventive water-based paint composition.

In this case, the resin is preferably a urethane resin or an acrylic resin.

These resins are preferable because of good compatibility with the additive for water-based paint containing the siloxane-branched polyether-modified silicone.

In addition, the inventive water-based paint composition is preferably used for antifouling paint.

The inventive water-based paint composition can exhibit excellent antifouling property without impairing various paint properties, such as defoaming property and leveling property.

Further, the present invention provides a coating layer formed from the water-based paint composition.

The inventive coating layer can be applied to various base materials, and exhibits excellent antifouling property.

### ADVANTAGEOUS EFFECTS OF INVENTION

The use of the inventive additive for water-based paint containing the siloxane-branched polyether-modified silicone makes it possible to provide the water-based paint composition and coating layer with small environmental load and excellent antifouling property.

### DESCRIPTION OF EMBODIMENTS

As described above, there have been demands for the development of a paint additive, as well as a paint composition and particularly a water-based paint, with small environmental load and imparting excellent antifouling performance.

The present inventor has diligently investigated to achieve the above object and consequently found that a siloxane-branched polyether-modified silicone imparts excellent antifouling performance to a paint, and completed the present invention.

Specifically, the present invention is an additive for water-based paint, comprising a siloxane-branched polyether-modified silicone shown by an average composition formula (1) R¹ₐR²_{b}R³_{c}SiO_{(4-a-b-c)/2} and having a weight-average molecular weight in a range of 500 to 100,000,
wherein in the formula (1) each R¹ is identical to or different from one another and represents an organic group selected from an alkyl group, an aryl group, and an aralkyl group having 1 to 30 carbon atoms, and an organic group shown by a general formula (2) -CₘH₂ₘ-O-(C₂H₄O)_{d}(C₃H₆O)ₑR⁴;
each R² represents a group shown by a general formula (3) -C_{mH2m}-O-(C₂H₄O)_{f}(C₃H₆O)_{g}-R⁵;
each R³ represents an organosiloxane shown by the following general formula (4) 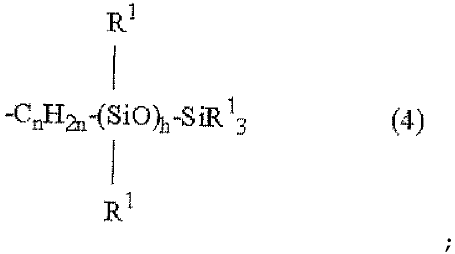
R⁴ represents a hydrocarbon group having 4 to 30 carbon atoms, or an organic group shown by R⁶-(CO)-;
R⁵ represents a hydrogen atom, a hydrocarbon group having 1 to 30 carbon atoms, or an organic group shown by R⁶-(CO)-;
R⁶ represents a hydrocarbon group having 1 to 30 carbon atoms;
R¹ in the general formula (4) is the same as R¹ in the formula (1);
"a", "b", and "c" respectively satisfy 1.0≤a≤2.5, 0.001≤b≤1.5, and 0.001≤c≤1.5;
"d" and "e" respectively represent integers satisfying 0≤d≤50 and 0≤e≤50;
"f" and "g" respectively represent integers satisfying 2≤f≤200, 0≤g≤200, and f+g being 3 to 200;
"m" represents an integer satisfying 0≤m≤10;
"h" represents an integer satisfying 0≤h≤500; and
"n" represents an integer satisfying 1≤n≤5, and wherein the siloxane-branched polyether-modified silicone satisfies the following expression (I), and the following expression (II), 5 ≤ {(a total molecular weight of a (C2H4O)d part in the general formula (2) and a (C2H4O)f part in the general formula (3) incorporated in the siloxane-branched polyether-modified silicone)/(a molecular weight of the siloxane-branched polyether-modified silicone) }×20 ≤ 10, and {(a total molecular weight of a (C3H6O)e part in the general formula (2) and a (C3H6O)g part in the general formula (3) incorporated in the siloxane-branched polyether-modified silicone)/(a total molecular weight of a (C2H4O)d part in the general formula (2) and a (C2H4O)f part in the general formula (3) incorporated in the siloxane-branched polyether-modified silicone)} ≤ 1.0.

Hereinafter, the present invention will be described in detail. However, the present invention is not limited thereto but defined in the claims.

### <Paint Additive>

The siloxane-branched polyether-modified silicone contained in the additive for water-based paint of the present invention is shown by an average composition formula (1) R¹ₐR²_{b}R³_{c}SiO_{(4-a-b-c)/2}. In the formula (1), each R¹ is identical to or different from one another and represents an organic group selected from an alkyl group, an aryl group, and an aralkyl group having 1 to 30 carbon atoms, and an organic group shown by a general formula (2) -CₘH₂ₘ-O-(C₂H₄O)_{d}(C₃H₆O)ₑR⁴. Each R² represents a group shown by a general formula (3) -CₘH₂ₘ-O-(C₂H₄O)_{f}(C₃H₆O)_{g}-R⁵. Each R³ represents an organosiloxane shown by the following general formula (4)

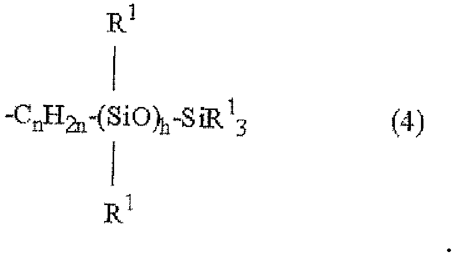

R⁴ represents a hydrocarbon group having 4 to 30 carbon atoms, or an organic group shown by R⁶-(CO)-. R⁵ represents a hydrogen atom, a hydrocarbon group having 1 to 30 carbon atoms, or an organic group shown by R⁶-(CO)-. R⁶ represents a hydrocarbon group having 1 to 30 carbon atoms. R¹ in the general formula (4) is the same as R¹ in the formula (1). "a", "b", and "c" respectively satisfy 1.0≤a≤2.5, 0.001≤b≤1.5, and 0.001≤c≤1.5. "d" and "e" respectively represent integers satisfying 0≤d≤50 and 0≤e≤50. "f" and "g" respectively represent integers satisfying 2≤f≤200, 0≤g≤200, and f+g being 3 to 200. "m" represents an integer satisfying 0≤m≤10. "h" represents an integer satisfying 0≤h≤500. "n" represents an integer satisfying 1≤n≤5.

Further, the siloxane-branched polyether-modified silicone satisfies the following expression (I), 5 ≤ {(a total molecular weight of a (C2H4O)d part in the general formula (2) and a (C2H4O)f part in the general formula (3) incorporated in the siloxane-branched polyether-modified silicone)/(a molecular weight of the siloxane-branched polyether- modified silicone)} × 20 ≤ 10; and the following expression (II), {(a total molecular weight of a (C3H6O)e part in the general formula (2) and a (C3H6O)g part in the general formula (3) incorporated in the siloxane-branched polyether-modified silicone)/(a total molecular weight of a (C2H4O)d part in the general formula (2) and a (C2H4O)f part in the general formula (3) incorporated in the siloxane-branched polyether- modified silicone)} ≤ 1.0.

R¹ in the formulae is an alkyl group, an aryl group, and an aralkyl group having 1 to 30 carbon atoms. R¹ is preferably an alkyl group, an aryl group, and an aralkyl group having 1 to 12 carbon atoms. R¹ is particularly preferably a methyl group, an ethyl group, a propyl group, a hexyl group, an octyl group, a dodecyl group, a phenyl group, and a 2-phenylpropyl group. Preferably, 80% or more of R¹'s are methyl groups.

Alternatively, R¹ may be an alkoxy group, an ester group, an alkenyl ether residue, or an alkenyl ester residue shown by the general formula (2) -CₘH₂ₘ-O-(C₂H₄O)_{d}(C₃H₆O)ₑ-R⁴. Herein R⁴ in the formula (2) is a monovalent hydrocarbon group having 4 to 30 carbon atoms, or an organic group shown by R⁶-(CO)-, and preferably a monovalent hydrocarbon group having 4 to 10 carbon atoms, or an organic group shown by R⁶-(CO)- because of availability. R⁶ is a hydrocarbon group having 1 to 30 carbon atoms, and preferably a hydrocarbon group having 1 to 10 carbon atoms because of availability.

"d", "e" and "m" are respectively integers satisfying 0≤d≤50, 0≤e≤50, and 0≤m≤10, and preferably integers satisfying 0≤d≤30, 0≤e≤30, and 2≤m≤5 because of availability. Incidentally, when the polyoxyalkylene moiety in the formula (2) is composed of both ethyleneoxide units and propyleneoxide units, the polyoxyalkylene moiety may be any of a block polymer and a random polymer of these two units.

R² is a group shown by the general formula (3) - CₘH₂ₘ-O-(C₂H₄O)_{f}(C₃H₆O)_{g}-R⁵. Herein R⁵ in the formula (3) represents a hydrogen atom, a monovalent hydrocarbon group having 1 to 30 carbon atoms, or an organic group shown by R⁶-(CO)-, and preferably a hydrocarbon group having 1 to 10 carbon atoms, an organic group shown by R⁶-(CO)-, or a hydrogen atom because of availability. R⁶ is as defined above.

"f" and "g" are respectively integers satisfying 2≤f≤200 and 0≤g≤200, and preferably integers satisfying 2≤f≤50 and 0≤g≤50 because of availability. Further, f+g is an integer satisfying 3 to 200, and preferably an integer satisfying 5 to 100. If f+g is smaller than 3, the antifouling property lowers. If f+g is larger than 200, the synthesis is hindered. "m" is as defined above.

Incidentally, like the formula (2), when the polyoxyalkylene moiety in the formula (3) is composed of both ethyleneoxide units and propyleneoxide units, the polyoxyalkylene moiety may be any of a block polymer and a random polymer of these two units.

R³ is an organosiloxane shown by the following general formula (4).

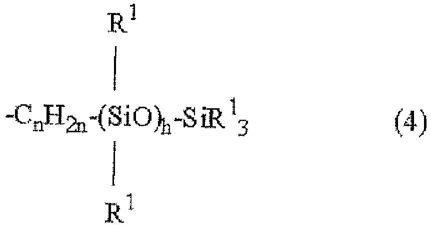

R¹ is as defined above. "h" is an integer satisfying 0≤h≤500, and preferably an integer satisfying 1≤h≤100. "n" is an integer satisfying 1≤n≤5, and preferably 2 because of availability. If "h" is larger than 500, the synthesis is hindered, and the compatibility with a resin is lowered as the water-based paint composition in some cases.

"a", "b", and "c" respectively satisfy 1.0≤a≤2.5, preferably 1.0≤a≤2.3, 0.001≤b≤1.5, preferably 0.05≤b≤1.0, and 0.001≤c≤1.5, preferably 0.01≤c≤1.0. If "a" and "b" deviates from the range, the compatibility is unstable as the water-based paint composition. Further, if "c" is below 0.001, the antifouling property as the water-based paint composition decreases, and if more than 1.5, the compatibility is unstable as the water-based paint composition.

Further, the siloxane-branched polyether-modified silicone shown by the formula (1) has a weight-average molecular weight of 500 to 100,000, preferably 1,000 to 80,000, and particularly preferably 1,500 to 40,000, in terms of polystyrene according to GPC. When the weight-average molecular weight is less than 500, the antifouling property lowers. When the weight-average molecular weight is more than 100,000, the resulting silicone has such high viscosity that it is difficult to handle, and further the compatibility with a resin is lowered as the water-based paint composition in some cases.

The siloxane-branched polyether-modified silicone contained in the inventive additive for water-based paint can be obtained by a known method. For example, as described in Patent Document 3 (JP 2001-039819 A), the siloxane-branched polyether-modified silicone can be easily synthesized by subjecting an organohydrogenpolysiloxane to addition reaction with an alkenyl group-containing organosiloxane and an alkenyl group-containing polyoxyalkylene compound in the presence of a platinum or rhodium catalyst.

The siloxane-branched polyether-modified silicone shown by the formula (1) satisfies the following expression (I), 5 ≤ {(a total molecular weight of a (C2H4O)d part in the general formula (2) and a (C2H4O)f part in the general formula (3) incorporated in the siloxane-branched polyether-modified silicone)/(a molecular weight of the siloxane-branched polyether- modified silicone)} × 20 ≤ 10; and the following expression (II), {(a total molecular weight of a (C3H6O)e part in the general formula (2) and a (C3H6O)g part in the general formula (3) incorporated in the siloxane-branched polyether-modified silicone)/(a total molecular weight of a (C2H4O)d part in the general formula (2) and a (C2H4O)f part in the general formula (3) incorporated in the siloxane-branched polyether- modified silicone)} ≤ 1.0.

Further, the expression (I) is preferably 5.5 ≤ {(a total molecular weight of a (C2H4O)d part in the general formula (2) and a (C2H4O)f part in the general formula (3) incorporated in the siloxane-branched polyether-modified silicone)/(a molecular weight of the siloxane-branched polyether- modified silicone)} × 20 ≤ 9.

The expression (II) is preferably {(a total molecular weight of a (C3H6O)e part in the general formula (2) and a (C3H6O)g part in the general formula (3) incorporated in the siloxane-branched polyether-modified silicone)/(a total molecular weight of a (C2H4O)d part in the general formula (2) and a (C2H4O)f part in the general formula (3) incorporated in the siloxane-branched polyether-modified silicone)} ≤ 0.5.

If the value of the expression (I) is smaller than the range, the compatibility with other component(s) in the water-based paint composition is impaired, and this causes segregation or lowers the leveling property (forming spots). If the value is larger than the range, the antifouling property consequently lowers. Further, if the value of the expression (II) is larger than the range likewise, the compatibility with other component(s) in the water-based paint composition is impaired, and this causes segregation and lowers not only the leveling property (forming spots) but also lowers the antifouling property.

Moreover, the inventive additive for water-based paint may be the siloxane-branched polyether-modified silicone only, or may further contain a solvent in addition to the siloxane-branched polyether-modified silicone. When the inventive additive for water-based paint contains a solvent and is added to a water-based paint composition, homogenizing by stirring becomes easier. Further, the paint additive may contain other components as necessary.

As the solvent which may be blended to the inventive additive for water-based paint, for example, it is possible to use one explained in the description of the water-based paint composition described below. Preferable ones are water, propylene glycol methyl ether, propylene glycol ethyl ether, propylene glycol butyl ether, dipropylene glycol methyl ether, dipropylene glycol ethyl ether, propylene glycol monomethyl ether acetate, butyl acetate methyl ethyl ketone, methyl isobutyl ketone. Furthermore, when the inventive additive for water-based paint contains a solvent, for example, the water-based-paint additive may be a 10 to 90% solution of the siloxane-branched polyether-modified silicone, preferably 10 to 50% solution, and further preferably 15 to 30% solution.

### <Water-based paint composition>

Furthermore, the present invention provides a water-based paint composition containing the additive for water-based paint. The water-based paint composition is used particularly for antifouling paint.

The addition amount of the siloxane-branched polyether-modified silicone (that is, the effective component contained in the inventive additive for water-based paint) is 0.01 to 10 parts by mass, preferably 0.1 to 5 parts by mass, of 100 parts by mass of the inventive water-based paint composition. With these ranges of the addition amount, dirt prevention corresponding to the addition amount is surely obtained, which is cost effective.

The inventive water-based paint composition preferably contains a resin. The resin is not particularly limited, and is selected from the group consisting of urethane resins, acrylic resins, amide resins, phenolic resins, epoxy resins, melamine resins, urea resins, alkyd resins, polyimide resins, polyalkylene resins, polyvinyl chloride, polystyrene, polyvinyl acetate, and alloys of the resins. The resin is preferably a urethane resin or an acrylic resin in view of the compatibility with the water-based-paint additive containing the siloxane-branched polyether-modified silicone.

The addition amount of the resin is 10 to 99.5 parts by mass, preferably 30 to 90 parts by mass, of 100 parts by mass of the inventive water-based paint composition. With the resin content being 10 parts by mass or more, there is no fear of decrease of mechanical strength.

The inventive water-based paint composition can be optionally blended with other well-known components in the industry as appropriate, such as a curing agent, a dilution solvent, a ultraviolet absorber, a polymerization initiator, a polymerization inhibitor, a neutralizing agent, a stabilizer (a light-resistant stabilizer, a weather-resistant stabilizer, a heat-resistant stabilizer), an antioxidant, a leveling agent, a defoaming agent, a viscosity adjuster, a precipitation-inhibitor, a pigment, a dye, a dispersant, an antistatic agent, an anti-fog agent, and a rubber.

Isocyanate compounds usable in aqueous systems are useful as the curing agent. Examples thereof include aliphatic isocyanate (hexamethylene diisocyanate derivative, Bayhydur XP 2655 manufactured by Covestro AG), etc. The amount of the curing agent is not particularly limited, and may be 1 to 30 parts by mass, preferably 3 to 20 parts by mass, of 100 parts by mass of the inventive water-based paint composition.

Examples of the dilution solvent include water, alcohols, esters, aliphatic hydrocarbons, aromatic hydrocarbons, ketones. Preferable are water, propylene glycol methyl ether, propylene glycol ethyl ether, propylene glycol butyl ether, dipropylene glycol methyl ether, dipropylene glycol ethyl ether, propylene glycol monomethyl ether acetate, butyl acetate methyl ethyl ketone, and methyl isobutyl ketone. Particularly preferable are water, propylene glycol methyl ether, propylene glycol ethyl ether, propylene glycol butyl ether, dipropylene glycol methyl ether, and dipropylene glycol ethyl ether. The amount of the dilution solvent is not particularly limited, and may be 10 to 90 parts by mass, preferably 20 to 70 parts by mass, of 100 parts by mass of the inventive water-based paint composition.

The inventive water-based paint composition has a viscosity (25°C, B-type viscometer) of, for example, 1 to 10,000 mPa·s, preferably 10 to 5,000 mPa·s, in consideration of the coatability, film thickness, etc.

### <Coating Layer>

Further, the present invention relates to a coating layer using the water-based paint composition.

Various methods to be applied for typical paints are available as the coating method with the water-based paint composition for obtaining the inventive coating layer. Specifically, examples thereof include spray coating, spin coating, roll coating, curtain coating, brushing, electrostatic coating, anionic and cationic electrodeposition coating, dipping, etc. In addition, the curing method after coating is not particularly limited and examples thereof include (heat) curing particularly at 0 to 200°C, more preferably 40 to 180°C.

Moreover, examples of base materials to which the coating layer is applied (materials to be coated) include: plastics such as polystyrene resins, acrylic resins, acrylonitrile-styrene-butadiene resins (ABS), polypropylene, ethylene-propylene resins, polycarbonate resins, Noryl resins, nylon resins, polyester resins, and blends (alloys) of these resins with, for example, polyolefins, fillers, and reinforcement materials, such as glasses and carbon fibers; thermosetting resins, such as epoxy resins, unsaturated polyester resins, and urethane resins; inorganic materials, such as glasses, mortars, asbestos-cement slates, and rocks; metals, such as iron (and alloys), copper (and alloys), aluminum (and alloys), and magnesium (and alloys); combustible materials, such as papers and vinyl fabrics; etc.

### EXAMPLE

Hereinafter, the present invention will be specifically described with reference to Examples and Comparative Examples. However, the present invention is not limited thereto. Incidentally, in a case where multiple repeating units, each of which is shown in the parentheses, are included in the structural formulae described below, these units are arranged at random.

### [Synthesis Example 1]

In a reactor, 250 g of organohydrogensiloxane shown by the following structural formula (I), 43 g of organosiloxane shown by the following structural formula (i), and 150 g of isopropyl alcohol were mixed, and 0.05 g of isopropyl alcohol solution of 3% by mass chloroplatinic acid was added. This mixture was allowed to react at 80°C for 4 hours.

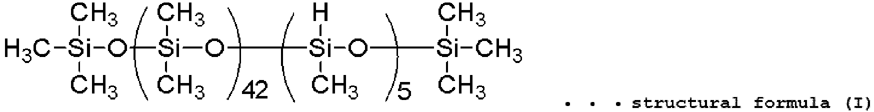

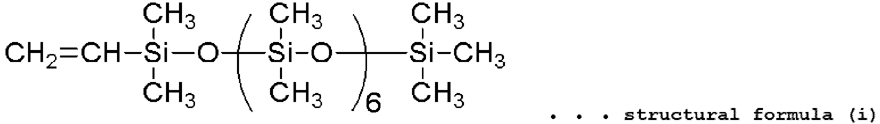

Then, 140 g of polyoxyalkylene compound of the following structural formula (a) was added, and the reaction was further continued for 3 hours.

CH₂=CHCH₂O(C₂H₄O)₉H . . . structural formula (a)

After completion of the reaction, the obtained solution was heated under reduced pressure to distill the solvent to give a compound (A) of organopolysiloxane shown by the following structural formula in a yield of 95%. 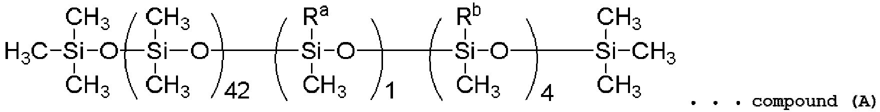 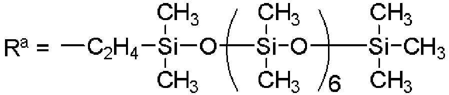 R^{b} **=** -C₃H₆O(C₂H₄O)₉H

The obtained compound (A) had a value of 5.3 in the expression (I), a value of 0 in the expression (II), and a weight-average molecular weight of 6,000.

### [Synthesis Example 2]

A compound (B) of the following formula was obtained in a yield of 95% as in Synthesis Example 1, except that 250 g of organohydrogensiloxane shown by the following structural formula (II) was used instead of one in the structural formula (I) in Synthesis Example 1, the addition amount of organosiloxane of the structural formula (i) was changed to 62 g, and polyoxyalkylene compound of the structural formula (b) was used in place of one in the structural formula (a) and added in an amount of 160 g.

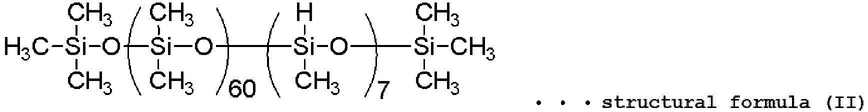

CH₂=CHCH₂O(C₂H₄O)₁₂H . . . structural formula (b)

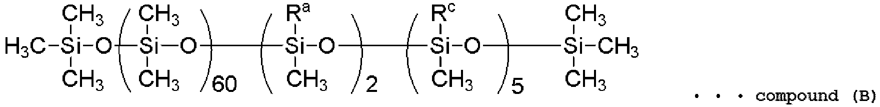

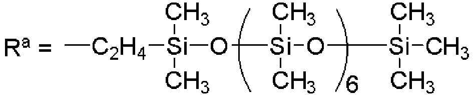

R^{c} = -C₃H₆O(C₂H₄O)₁₂H

The obtained compound (B) had a value of 5.7 in the expression (I), a value of 0 in the expression (II), and a weight-average molecular weight of 9,200.

### [Synthesis Example 3]

A compound (C) of the following formula was obtained in a yield of 95% as in Synthesis Example 1, except that 250 g of organohydrogensiloxane shown by the following structural formula (III) was used instead of one in the structural formula (I) in Synthesis Example 1, the addition amount of organosiloxane of the structural formula (i) was changed to 41 g, and polyoxyalkylene compound of the structural formula (c) was used in place of one in the structural formula (a) and added in an amount of 335 g.

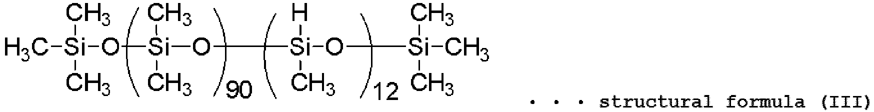

CH₂=CHCH₂O(C2H4O)₁₅(C₃H₆O)₅H . . . structural formula (c)

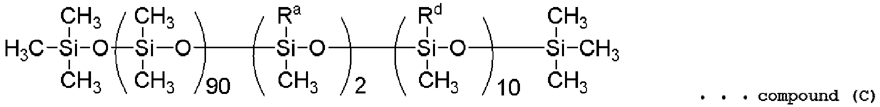

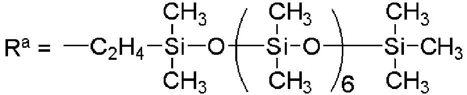

R^{d} = -C₃H₆O(C₂H₄O)₁₅(C₃H₆O)₅H

The obtained compound (C) had a value of 7.0 in the expression (I), a value of 0.44 in the expression (II), and a weight-average molecular weight of 18,800.

### [Synthesis Example 4]

A compound (F) of the following formula was obtained in a yield of 95% as in Synthesis Example 3, except that 269 g of polyoxyalkylene compound of the structural formula (d) was used in place of one in the structural formula (c) in Synthesis Example 3.

CH₂=CHCH₂O(C₂H₄O)₁₇H . . . structural formula (d)

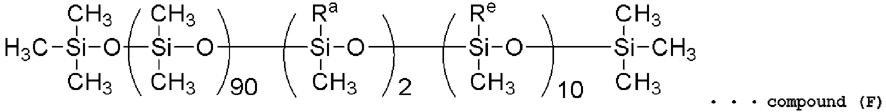

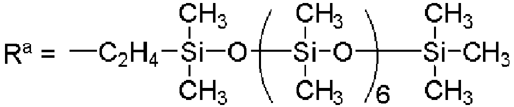

R^{e} **=** -C₃H₆O(C₂H₄O)₁₇H

The obtained compound (F) had a value of 8.9 in the expression (I), a value of 0 in the expression (II), and a weight-average molecular weight of 16,800.

### [Example 1]

A mixture was prepared by mixing 116 g of Bayhydrol A 2651 (aqueous dispersion of 41% acrylic resin manufactured by Covestro AG), 4.65 g of water, 23.3 g of Bayhydur XP 2655 (isocyanate-based curing agent for aqueous system, manufactured by Covestro AG), and 4.00 g of dipropylene glycol methyl ether. To 20 g of this mixture, 0.8 g of 25% dipropylene glycol methyl ether solution of the compound (A) obtained in Synthesis Example 1 was added as the additive for water-based paint. Then, the resultant was mixed by using a dispersion mixer until uniform to prepare a water-based paint composition. After being left standing for 30 minutes, the obtained water-based paint composition was coated on glass using an applicator so as to have the thickness of 30 µm, and heated and cured at 80°C for 90 minutes to form a coating layer (1). The obtained coating layer (1) was subjected to various evaluations as follows.

### Compatibility

The water-based paint composition was uniformly mixed by using a dispersion mixer and left standing for 10 minutes. Then, the state of the water-based paint composition was observed.
Excellent: transparent.
Fair: slightly cloudy.
Bad: cloudy or separated.

### Defoaming Property

The water-based paint composition was uniformly mixed by using a dispersion mixer and left standing for 10 minutes. Then, the state of the water-based paint composition was observed.
Excellent: no foams.
Fair: a few fine foams.
Bad: a lot of foams.

### Leveling Property

The surface state of the coating layer on the glass was visually observed.
Excellent: smooth surface state.
Fair: fine craters in places on surface.
Bad: large craters and waves on surface.

### Antifouling Property

A line was drawn with a marker pen on the coating layer on the glass, and rubbed with tissue paper. The easiness for erasing the line was evaluated in this event.
Excellent: the line was easily erased.
Fair: the line was erased by repeatedly rubbing the layer with force.
Bad: the line was not erased.

### [Example 2]

A coating layer (2) was formed and the various properties thereof were evaluated as in Example 1, except that 25% dipropylene glycol methyl ether solution of the compound (B) was used instead of 25% dipropylene glycol methyl ether solution of the compound (A) in Example 1.

### [Example 3]

A coating layer (3) was formed and the various properties thereof were evaluated as in Example 1, except that 25% dipropylene glycol methyl ether solution of the compound (C) was used instead of 25% dipropylene glycol methyl ether solution of the compound (A) in Example 1.

### [Example 4]

A coating layer (4) was formed and the various properties thereof were evaluated as in Example 1, except that 25% dipropylene glycol methyl ether solution of the compound (F) was used instead of 25% dipropylene glycol methyl ether solution of the compound (A) in Example 1.

### [Comparative Example 1]

A coating layer (5) was formed and the various properties thereof were evaluated as in Example 1, except that 25% dipropylene glycol methyl ether solution of the compound (A) in Example 1 was not added.

### [Comparative Example 2]

A coating layer (6) was formed and the various properties thereof were evaluated as in Example 1, except that 25% dipropylene glycol methyl ether solution of a compound (D) of the following formula (the value in the expression (I): 3.9, the value in the expression (II): 0, weight-average molecular weight: 6,100) was used instead of 25% dipropylene glycol methyl ether solution of the compound (A) in Example 1.

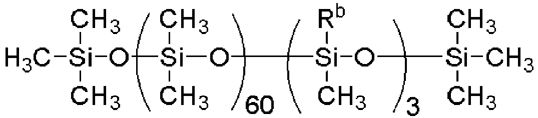

R^{b} = -C₃H₆O(C₂H₄O)₉H ... compound (D)

### [Comparative Example 3]

A coating layer (7) was formed and the various properties thereof were evaluated as in Example 1, except that 25% dipropylene glycol methyl ether solution of a compound (E) of the following formula (the value in the expression (I): 4.7, the value in the expression (II): 0, weight-average molecular weight: 6,100) was used instead of 25% dipropylene glycol methyl ether solution of the compound (A) in Example 1.

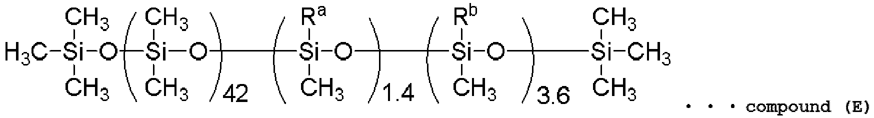

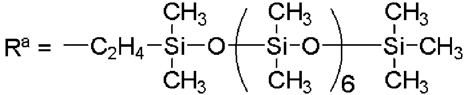

R^{b} = -C₃H₆O(C₂H₄O)₉H

### [Comparative Example 4]

A coating layer (8) was formed and the various properties thereof were evaluated as in Example 1, except that 25% dipropylene glycol methyl ether solution of a compound (G) of the following formula (the value in the expression (I): 10.1, the value in the expression (II): 0, weight-average molecular weight: 17,100) was used instead of 25% dipropylene glycol methyl ether solution of the compound (A) in Example 1.

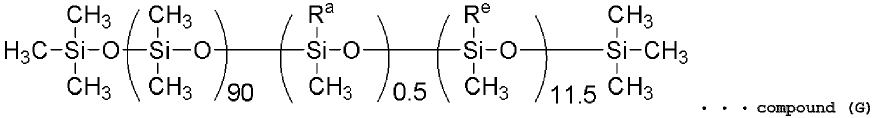

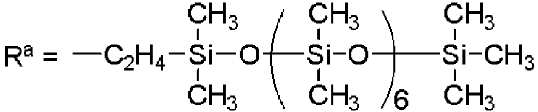

R^{e} = -C₃H₆O(C₂H₄O)₁₇H

### [Comparative Example 5]

A coating layer (9) was formed and the various properties thereof were evaluated as in Example 1, except that 25% dipropylene glycol methyl ether solution of a compound (H) of the following formula (the value in the expression (I): 5.2, the value in the expression (II): 1.10, weight-average molecular weight: 20,400) was used instead of 25% dipropylene glycol methyl ether solution of the compound (A) in Example 1.

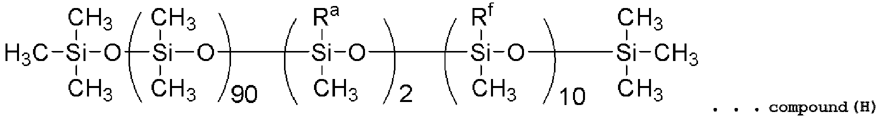

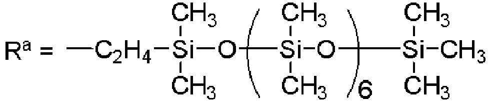

R^{f} = -C₃H₆O(C₂H₄O)₁₂(C₃H₆O)₁₀H

The following Table 1 shows the results of Examples 1, 2, 3, and 4 and Comparative Examples 1, 2, 3, 4, and 5.

**[Table 1]**

| | Example 1 | Example 2 | Example 3 | Example 4 | Comparative Example 1 | Comparative Example 2 | Comparative Example 3 | Comparative Example 4 | Comparative Example 5 |
|---|---|---|---|---|---|---|---|---|---|
| Coating layer | (1) | (2) | (3) | (4) | (5) | (6) | (7) | (8) | (9) |
| Compatibility | Excellent | Excellent | Excellent | Excellent | Excellent | Bad | Bad | Excellent | Fair |
| Defoaming Property | Excellent | Excellent | Excellent | Excellent | Fair | Excellent | Excellent | Fair | Excellent |
| Leveling Property | Excellent | Excellent | Excellent | Excellent | Bad | Bad | Fair | Excellent | Fair |
| Antifouling Property | Excellent | Excellent | Excellent | Excellent | Bad | Bad | Fair | Bad | Bad |

As shown in Table 1, it was revealed that the coating layers (1), (2), (3), and (4) formed from the water-based paint compositions using the inventive additives for water-based paint exhibited excellent antifouling property without impairing compatibility, defoaming property, and leveling property.

In contrast, Comparative Example 1 using the water-based paint composition without the additive failed to obtain good results in any of defoaming property, leveling property and antifouling property. Unlike the inventive additives for water-based paint, since the additive used in Comparative Example 2 did not have the structure of the general formula (4), good antifouling property was not obtained, either; besides, since the value in the expression (I) was not more than the lower limit value, the compatibility was also poor. In Comparative Example 3, although the additive having the structure of the general formula (4) was used, the value in the expression (I) was not more than the lower limit value, so that the compatibility was poor, and the result of the antifouling property was also inferior to the present invention. Meanwhile, Comparative Example 4 exceeded the upper limit of the expression (I), so that the antifouling property was lower. Further, Comparative Example 5 exceeded the upper limit of the expression (II), so that decreases in compatibility, leveling property, and antifouling property were observed.

## Claims

1. An additive for water-based paint, comprising a siloxane-branched polyether-modified silicone shown by an average composition formula (1) R¹ₐR²_{b}R³_{c}SiO_{(4-a-b-c)/2} and having a weight-average molecular weight in a range of 500 to 100,000,
wherein in the formula (1) each R¹ is identical to or different from one another and represents an organic group selected from an alkyl group, an aryl group, and an aralkyl group having 1 to 30 carbon atoms, and an organic group shown by a general formula (2) -CₘH₂ₘ-O-(C₂H₄O)_{d}(C₃H₆O)ₑR⁴;
each R² represents a group shown by a general formula (3) -CₘH₂ₘ-O-(C₂H₄O)_{f}(C₃H₆O)_{g}-R⁵;
each R³ represents an organosiloxane shown by the following general formula (4) 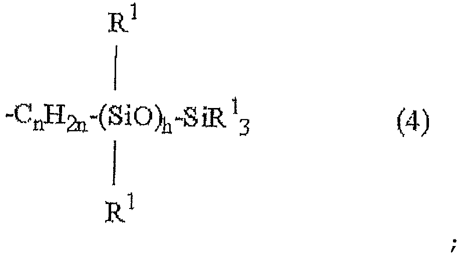
R⁴ represents a hydrocarbon group having 4 to 30 carbon atoms, or an organic group shown by R⁶-(CO)-;
R⁵ represents a hydrogen atom, a hydrocarbon group having 1 to 30 carbon atoms, or an organic group shown by R⁶-(CO)-;
R⁶ represents a hydrocarbon group having 1 to 30 carbon atoms;
R¹ in the general formula (4) is the same as R¹ in the formula (1);
"a", "b", and "c" respectively satisfy 1.0≤a≤2.5, 0.001≤b≤1.5, and 0.001≤c≤1.5;
"d" and "e" respectively represent integers satisfying 0≤d≤50 and 0≤e≤50;
"f" and "g" respectively represent integers satisfying 2≤f≤200, 0≤g≤200, and f+g being 3 to 200;
"m" represents an integer satisfying 0≤m≤10;
"h" represents an integer satisfying 0≤h≤500; and
"n" represents an integer satisfying 1≤n≤5, and wherein the siloxane-branched polyether-modified silicone satisfies the following expression (I) and the following expression (II), 5 ≤ {(a total molecular weight of a (C2H4O)d part in the general formula (2) and a (C2H4O)f part in the general formula (3) incorporated in the siloxane-branched polyether-modified silicone)/(a molecular weight of the siloxane-branched polyether-modified silicone) }×20 ≤ 10, and {(a total molecular weight of a (C3H6O)e part in the general formula (2) and a (C3H6O)g part in the general formula (3) incorporated in the siloxane-branched polyether-modified silicone)/(a total molecular weight of a (C2H4O)d part in the general formula (2) and a (C2H4O)f part in the general formula (3) incorporated in the siloxane-branched polyether-modified silicone)} ≤ 1.0.

2. The additive for water-based paint according to claim 1, further comprising a solvent.

3. A water-based paint composition comprising the additive for water-based paint according to claim 1 or 2.

4. The water-based paint composition according to claim 3, comprising a resin selected from the group consisting of urethane resins, acrylic resins, amide resins, phenolic resins, epoxy resins, melamine resins, urea resins, alkyd resins, polyimide resins, polyalkylene resins, polyvinyl chloride, polystyrene, polyvinyl acetate, and alloys of the resins.

5. The water-based paint composition according to claim 4, wherein the resin is a urethane resin or an acrylic resin.

6. The water-based paint composition according to any one of claims 3 to 5, the composition being used for antifouling paint.

7. A coating layer formed from the water-based paint composition according to any one of claims 3 to 6.

## Patentansprüche

1. Additiv für Farbe auf Wasserbasis, umfassend ein siloxanverzweigtes, polyethermodifiziertes Silicon, das durch eine durchschnittliche Zusammensetzungsformel (1) R¹ₐR²_{b}R³_{c}SiO_{(4-a-b-c)/2} dargestellt ist und ein gewichtsmittleres Molekulargewicht in einem Bereich von 500 bis 100.000 aufweist,
wobei in der Formel (1) jedes R¹ identisch oder unterschiedlich ist und eine organische Gruppe, ausgewählt aus einer Alkylgruppe, einer Arylgruppe und einer Aralkylgruppe mit 1 bis 30 Kohlenstoffatomen, und eine organische Gruppe, die durch die allgemeine Formel (2) -CₘH₂ₘ-O-(C₂H₄O)_{d}(C₃H₆O)ₑR⁴ dargestellt ist, repräsentiert;
wobei jedes R² stellt eine Gruppe repräsentiert, die durch eine allgemeine Formel (3) -CₘH₂ₘ-O-(C₂H₄O)_{f}(C₃H₆O)_{g}-R5 dargestellt ist;
wobei jedes R³ ein Organosiloxan repräsentiert, das durch die folgende allgemeine Formel (4) dargestellt ist 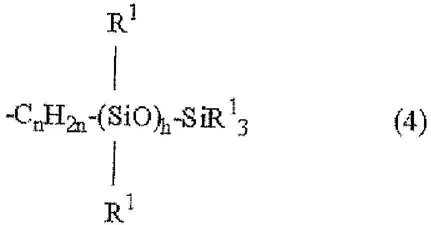
wobei R⁴ eine Kohlenwasserstoffgruppe mit 4 bis 30 Kohlenstoffatomen oder eine organische Gruppe repräsentiert, die durch R⁶-(CO)- dargestellt ist;
wobei R⁵ ein Wasserstoffatom, eine
Kohlenwasserstoffgruppe mit 1 bis 30 Kohlenstoffatomen oder eine organische Gruppe repräsentiert, die durch dargestellt durch R⁶-(CO)- dargestellt ist;
wobei R⁶ eine Kohlenwasserstoffgruppe mit 1 bis 30 Kohlenstoffatomen repräsentiert;
wobei R¹ in der allgemeinen Formel (4) das gleiche wie R¹ in der Formel (1) ist;
wobei "a", "b" und "c" jeweils 1,0≤a≤2,5, 0,001 ≤ b≤1,5 und 0,001≤c≤1,5 erfüllen;
wobei "d" und "e" jeweils ganze Zahlen repräsentieren, die 0≤d≤ 50 und 0≤e≤ 50 erfüllen;
wobei "f" und "g" jeweils ganze Zahlen repräsentieren, die 2≤f≤200, 0≤g≤200 und f+g gleich 3 bis 200 erfüllen;
wobei "m" eine ganze Zahl repräsentiert, die 0≤m≤10 erfüllt;
wobei "h" eine ganze Zahl repräsentiert, die 0≤h≤500 erfüllt; und
wobei "n" eine ganze Zahl repräsentiert, die 1≤n≤5 erfüllt, und
wobei das siloxanverzweigte polyethermodifizierte Silicon die folgende Gleichung (I) und die folgende Gleichung (II) erfüllt: 5 ≤ {(ein Gesamtmolekulargewicht eines (C2H4O)d-Teils in der allgemeinen Formel (2) und eines (C2H4O)f-Teils in der allgemeinen Formel (3), die in dem siloxanverzweigten polyethermodifizierten Silicon enthalten sind)/(ein Molekulargewicht des siloxanverzweigten polyethermodifizierten Silicons)} x 20 ≤ 10, und {(ein Gesamtmolekulargewicht eines (C3H6O)e-Teils in der allgemeinen Formel (2) und eines (C3H6O)g-Teils in der allgemeinen Formel (3), die in dem siloxanverzweigten polyethermodifizierten Silicon enthalten sind)/(ein Gesamtmolekulargewicht eines (C2H4O)d-Teils in der allgemeinen Formel (2) und eines (C2H4O)f-Teils in der allgemeinen Formel (3), die in dem siloxanverzweigten polyethermodifizierten Silicon enthalten sind)} ≤ 1,0.

2. Additiv für Farben auf Wasserbasis nach Anspruch 1, das ferner ein Lösungsmittel enthält.

3. Farbzusammensetzung auf Wasserbasis, die das Additiv für Farben auf Wasserbasis nach Anspruch 1 oder 2.

4. Farbzusammensetzung auf Wasserbasis nach Anspruch 3, umfassend ein Harz, ausgewählt aus der Gruppe bestehend aus Urethanharzen, Acrylharzen, Amidharzen, Phenolharzen, Epoxidharzen, Melaminharzen, Harnstoffharzen, Alkydharzen, Polyimidharzen, Polyalkylenharzen, Polyvinylchlorid, Polystyrol, Polyvinylacetat und Legierungen dieser Harze.

5. Farbzusammensetzung auf Wasserbasis nach Anspruch 4, wobei das Harz ein Urethanharz oder ein Acrylharz ist.

6. Farbzusammensetzung auf Wasserbasis nach einem der Ansprüche 3 bis 5, wobei die Zusammensetzung als Antifoulingfarbe verwendet wird.

7. Überzugsschicht, die aus der Farbzusammensetzung auf Wasserbasis nach einem Ansprüche 3 bis 6 gebildet ist.

## Revendications

1. Additif pour peinture à l'eau, comprenant une silicone modifiée par un polyéther ramifié par sibxane, présentée par la formule de composition moyenne (1) R'ₐR²_{b}R³_{c}SiO_{(4-a-b-c)/2} et ayant une masse moléculaire moyenne en poids dans une plage de 500 à 100 000.
dans lequel dans la formule (1), chaque R¹ est identique ou différent des autres et représente un groupe organique choisi parmi un groupe alkyle, un groupe aryle et un groupe aralkyle ayant de 1 à 30 atomes de carbone, et un groupe organique représenté par la formule générale (2) -CₘH₂ₘ-O-(C₂H₄O)_{d}(C₃H₆O)ₑR⁴ ;
chaque R² représente un groupe présenté par la formule générale (3) -CₘH₂ₘ-O-(C₂H_{4O})_{f}(C_{3H6}O)_{g}-R⁵ ;
chaque R³ représente un organosiloxane présenté par la formule générale (4) suivante : 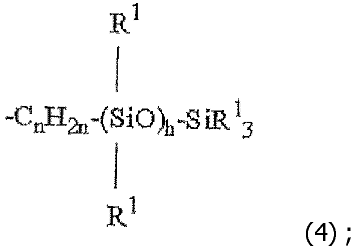
R⁴ représente un groupe hydrocarboné ayant de 4 à 30 atomes de carbone, ou un groupe organique présenté par R⁶-(CO)- ;
R⁵ représente un atome d'hydrogène, un groupe hydrocarboné ayant de 1 à 30 atomes de carbone, ou un groupe organique présenté par R⁶-(CO)- ;
R⁶ représente un groupe hydrocarboné ayant de 1 à 30 atomes de carbone ;
R¹ dans la formule générale (4) est identique à R¹ dans la formule (1) ; « a », « b » et « c » satisfont respectivement 1,0 ≤ a ≤ 2,5, 0,001 ≤ b ≤ 1,5 et 0,001 ≤ c ≤ 1,5 ;
« d » et « e » représentent respectivement des nombres entiers satisfaisant 0 ≤ d ≤ 50 et 0 ≤ e ≤ 50 ;
« f » et « g » représentent respectivement des nombres entiers satisfaisant 2 ≤ f ≤ 200, 0 ≤ g ≤ 200, et f+g étant 3 à 200 ;
« m » représente un nombre entier satisfaisant 0 ≤ m ≤ 10 ;
« h » représente un nombre entier satisfaisant 0 ≤ h ≤ 500 ; et
« n » représente un nombre entier satisfaisant 1 ≤ n ≤ 5, et
dans lequel la silicone modifiée par un polyéther ramifié par siloxane satisfait l'expression (I) suivante et l'expression (II) suivante : 5 ≤ {(un poids moléculaire total d'une partie (C2H4O)d dans la formule générale (2) et d'une partie (C2H4O)f dans la formule générale (3) incorporées dans la silicone modifiée par un polyéther ramifié par sibxane)/(un poids moléculaire de la silicone modifiée par un polyéther ramifié par siloxane)}x20 ≤ 10, et {(un poids moléculaire total d'une partie (C3H6O)e dans la formule générale (2) et d'une partie (C3H6O)g dans la formule générale (3) incorporées dans la silicone modifiée par un polyéther ramifié par siloxane)/(un poids moléculaire total d'une partie (C2H4O)d dans la formule générale (2) et d'une partie (C2H4O)f dans la formule générale (3) incorporées dans la silicone modifiée par un polyéther ramifié par siloxane)} ≤ 1,0.

2. Additif pour peinture à l'eau selon la revendication 1, comprenant en outre un solvant.

3. Composition de peinture à l'eau comprenant l'additif pour peinture à l'eau selon la revendication 1 ou 2.

4. Composition de peinture à l'eau selon la revendication 3, comprenant une résine choisie dans le groupe constitué par les résines uréthane, les résines acryliques, les résines amides, les résines phénoliques, les résines époxy, les résines mélamine, les résines urée, les résines alkydes, les résines polyimides, les résines polyalkylène, le polychlorure de vinyle, le polystyrène, l'acétate de polyvinyle et les alliages des résines.

5. Composition de peinture à l'eau selon la revendication 4, dans laquelle la résine est une résine uréthane ou une résine acrylique.

6. Composition de peinture à l'eau selon l'une quelconque des revendications 3 à 5, la composition étant utilisée pour une peinture antisalissure.

7. Couche de revêtement formée à partir de la composition de peinture à l'eau selon l'une quelconque des revendications 3 à 6.
